# EUROPEAN PATENT APPLICATION

(11) **EP 0 570 630 A1**
(43) Date of publication of application: **24.11.1993**
(21) Application number: 92201410.5
(22) Date of filing: 19.05.1992
(51) Int. Cl.: H04L 12/56, H04Q 11/04

(54) **Connectionless server**

(71) Applicant: ALCATEL BELL Naamloze Vennootschap, B-2018 Antwerpen 1 (BE); ALCATEL N.V., NL-2288 BH Rijswijk (NL)
(72) Inventor: Reynders, Paul Theo Maria, B-2100 Deurne (BE); Deloddere, Daniel, B-9150 Bazel (BE); Petit, Guido Henri Marguerite, B-2018 Antwerp (BE); Henrion, Michel André Robert, B-1180 Brussels (BE)

(57) **Abstract**

The connectionless server is able to transfer messages constituted by information packets over a connection oriented switching network ATM in a connectionless way. It includes a plurality of processing modules TLK1 to TLKm, CLSP1 to CLSPn and CLPR1 to CLPRp, which perform respective predetermined actions on the information packets in a predetermined sequence and thereafter transfer these packets over the ATM network. The modules communicate with each other over a switching means MPSR which can be the ATM network. The time interval needed to perform the mentioned actions is at most equal to the minimum inter arrival time between two successive packets at the server. As a result the packet are handled on the fly.

## Description

The present invention relates to a connectionless server for a connection oriented switching network to which are connected a plurality of terminal units having access to said connectionless server, said connectionless server being able to transfer messages constituted by information packets and received from said terminal units in a connectionless way over said connection oriented switching network.

Such a server is well known in the art, e.g. from the not yet published European Patent Application No 91200301.9 wherein a communication switching system including such a connectionless server is described in a functional way.

An object of the invention is to provide a reliable and flexible operational embodiment of a connectionless server as functionally described in the above patent application.

This object is achieved due to the fact that said connectionless server includes a plurality of processing modules which perform respective predetermined control actions on said packets in a predetermined sequence, and thereafter transfer said packets over said network, and at least part of which communicate with each other over a switching means.

In this way a modular connectionless server is realized. The processing modules can be maintained separately, e.g. for version upgrade, extension or repair, thereby realizing a flexible structure. Pools of modules performing identical actions can be provided to improve the server reliability. Selection of one of the modules of such a pool, e.g. in function of its availability, can be realized using the switching means.

Another characteristic feature of the connectionless server according to the invention is that said switching means is part of said switching network.

As a result the modules of the server can be distributed over the switching network and modules performing general actions can be used by different servers. The connectionless server is then completely incorporated in the switching network and no additional hardware has to be foreseen to realize the switching means.

Further characteristic features of the present connectionless server are that it additionally includes a delay means in which each of said packets is delayed until all of said control actions are performed thereon, that said delay means is organized as a first-in-first-out shift register in which each of said information packets is shifted each time at least one of said control actions is performed on said packet, said packet being provided at an output of said shift register for transfer over said switching network when all of said control actions on said packet have been performed and that the time interval needed to perform each of said control actions is at the most equal to the minimum inter arrival time of two successive information packets at said delay means.

As a result a packet received by the connectionless server is never queued without actions being performed thereon, i.e. the packets are handled on the fly.

Indeed, a packet received by the connectionless server is stored in the first-in-first-out or FIFO register and after a first action is performed by a first module, the packet is shifted in the FIFO register, thereby making storage capacity available for the next arriving packet. Since the elementary actions performed by the different modules are defined in such a way that their performance time does not exceed the inter arrival time of the packets at the FIFO, the above first action is finished the moment a new packet arrives. The packet is thus shifted in the FIFO as the sequence of actions is performed. When the packet arrives at the output of the FIFO, all actions are performed and the packet is transmitted over the network to its destination.

Another feature of the connectionless server of the invention is that said control actions include source address validation actions to validate a source address included in at least one of the packets of said message, destination address screening actions to evaluate a destination address included in at least one of the packets of said message, access class policing to limit the transmission rate of said packets to a maximum transmission rate, charging actions to enable charging on said transfer, routing actions to determine the route to be followed by said information packets over said switching network, source address screening actions to evaluate a source address included in at least one of the packets of said message and message identifier allocation actions to allocate to each of said packets an identifier which identifies the message to which said packet relates.

Still another characteristic of the connectionless server according to the invention is that said it additionally includes a congestion prevention module comprising a measurement means to measure the bandwidth required to transfer said information packets over said connection oriented switching network, and a comparison means to compare said required bandwidth with the bandwidth available on said network for said transfer and to generate a control signal indicative of the result of said comparison.

In this way it is avoided to handle packets which, when being provided at the output of the FIFO, cannot be sent over the network due to a lack of available bandwidth. The control signal is indeed used to indicate the above possible lack of available bandwidth the moment a packet is received by the connectionless server. At that moment the packet can be queued or an indication of overload can be sent to the originator of the packet.

The invention thus also relates to a congestion prevention module located at an access of a switching network and which includes a mesurement means to measure the bandwidth required to transfer information packets over said switching network and a comparison means to compare said required bandwidth with the bandwidth available on said network for said transfer and to generate a control signal indicative of the result of said comparison.

The above mentioned and other objects and features of the invention will become more apparent and the invention itself will be best understood by referring to the following description of an embodiment taken in conjunction with the accompanying drawings wherein:
Fig. 1 represents a block diagram of a connectionless server CS according to the invention;
Fig. 2 shows the Connectionless Service Processor CLSP1 of Fig. 1 in more detail;
Fig. 3 shows the Message Handler Processor MHP of Fig. 2 in more detail;
Fig. 4 represents a block diagram of the Connectionless Packet Router CLPR1 of Fig. 1; and
Fig. 5 shows a packet handling scenario for a packet received by the connectionless server of Fig. 1.

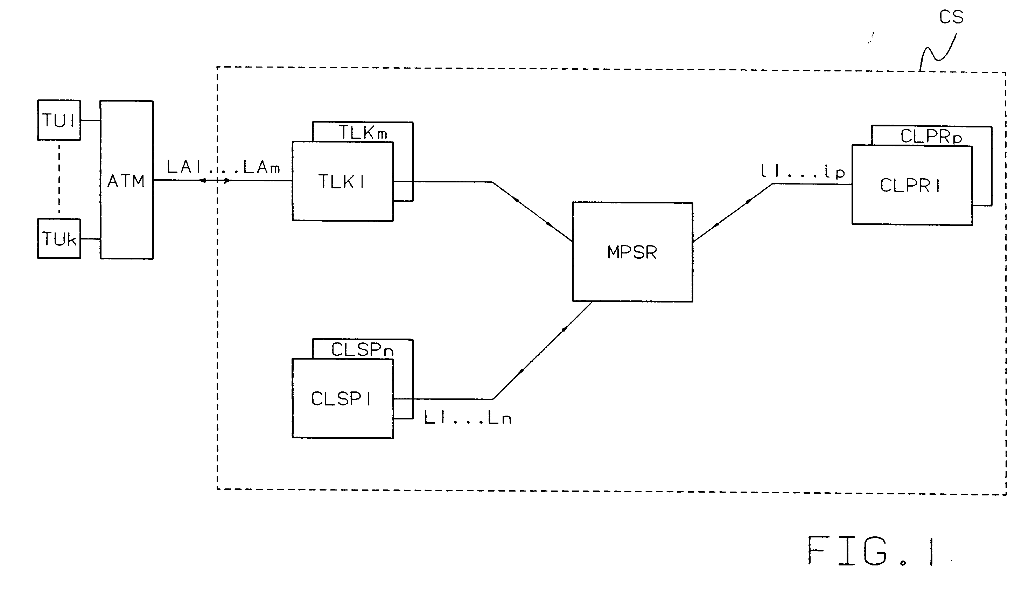

The information packets received and handled by the connectionless server CS of Fig. 1 are obtained by segmenting information messages. They consist of a header part and an information part. The first packet of a message, called the Beginning of Message packet or BOM packet, includes in its header a destination address, a source address, an identification of the path the packet has to follow, an incoming message identifier to identify the message the packet is part of, and a code indicating that the packet is a BOM packet.

The following packets except the last one are called continuation of message or COM packets and only contain a time stamp, an incoming message identifier and a sequence number indicative of their location in the latter message. The last packet, called End Of Message or EOM packet, additionally contains a code to indicate that it is an EOM packet.

The connectionless server CS of Fig. 1 is connected via access links LA1/m to an Asynchronous Transfer Mode (ATM) switching network ATM via which terminal units TU1 to TUk have access to the connectionless server CS. These terminal units can send information packets or cells in a connectionless way, over the ATM network which is connection oriented. For this purpose permanent virtual connections are established in the ATM network to form therein a connectionless virtual overlay network. A terminal unit wanting to transmit a packet in a connectionless way across the ATM network, sends this packet over the ATM network to a dedicated connectionless server, such as CS, which in addition to performing address validation, address screening and charging actions determines the permanent virtual path to be followed by the packet in the ATM network. After having inserted appropriate routing information in the latter packet the server transmits the packet via this path to its destination, possibly via another connectionless server. The latter is then called a transfer connectionless server. A detailed description of the establishment and use of such a virtual overlay network is given in the not yet published European Patent Application No 91200301.9.

Following is now a description of the connectionless server CS and of its operation.

An information packet supplied by one of the terminal units TU1/k to the connectionless server CS of Fig. 1 is received by one of a set of Link Termination modules TLK1 to TLKm which are connected to a multipath, self routing switch MPSR. Such a switch is well known in the art and is for instance described in the published International Patent Application W091/02420 and in the published European Patent Applicaiton 0 446 493 A1. Also a pool of Connectionless Packet Router modules, CLPR1 to CLPRp, and a set of Connectionless Service Processors, CLSP1 to CLSPn are connected to the switch MPSR via links l1 to lp and L1 to Ln respectively.

It has to be noted that in Fig. 1 the groups of bidirectional links L1/Ln, l1/lp, and LA1/LAm are each represented by a single line.

It has also to be noted that the switch MPSR can be part of the ATM network, in which case the connectionless server is integrated in the ATM network.

Each link termination module is connected to a dedicated connectionless service processor via a semi permanent connection in MPSR. However, one connectionless service processor can be dedicated to more than one link termination module.

A packet received in CS from a terminal unit and by a particular link termination module TLK1/m on a particular physical link LA1/m and more particularly on a particular virtual connection thereof, as indicated by information contained in a header of this packet, is routed by the link termination module over the switch MPSR to its dedicated Connectionless Service Processor CLSP1/n. On the other hand, a packet already handled by CS and which has to be sent on a particular physical link and more particularly on a particular virtual connection thereof by a particular link termination module, was previously screened by a particular connectionless service processor, as will be explained later.

In addition to routing to the appropriate connectionless service processor, CLSP1/n, TLK1 to TLKm perform interface functions between the ATM network and the switch MPSR. These functions together with the latter routing function are obvious to a person skilled in the art and therefore the link termination modules are not described in more detail.

CLSP1 to CLSPn are able to perform actions on packets received from the ATM network, in which case they are temporarily called input connectionless service processors, as well as actions on packets to be sent over the ATM network, in which case they are temporarily called output connectionless service processors.

Input connectionless service processors perform error checks on the received packet as well as input screening. These include :
- a CRC check;
- a sequence number check on the sequence number inserted in the header of the packet. In case of missing sequence number all subsequently received packet of the same message are discarded;
- message length check based on message length related information included in the packets. Again in case of failure all subsequently received packets are discarded; and
- a check on time-out of packets. In case of time out the same measure is taken as mentioned previously.

On packets coming directly from a terminal unit the input connectionless service processors perform destination address screening, i.e. they check whether packets may be sent to the specified destination address, source address validation, i.e. validation of the source address, and access class enforcement, i.e. it checks whether the bitrate of the packets stays below a predetermined rate.

Input connectionless service processors also route each received packet to an appropriate Link Termination Module TLK1/m for transfer over the ATM network.

Output connectionless service processors perform operations on packets to be transmitted over the ATM network, e.g. screening of the source address contained in the header of the BOM packet and allocation of a message identity or MID to the message.

Based on the destination address in the header of the BOM packet of a message, the connectionless packet router modules CLPR1 to CLPRp, look in their routing tables for an appropriate outgoing link/connection over which all packets of the message will be sent.

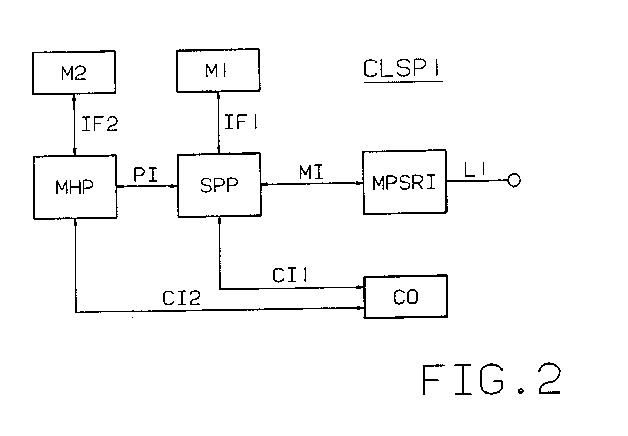

With reference to Fig. 2 one of the connectionless service processors, namely CLSP1, is described in more detail. This description is applicable to all connectionless service processors.

CLSP1 consists of an MPSR interface module MPSRI connected to the link L1 and to a Segment Protocol Processor SPP over a link MI. SPP communicates with an associated memory M1 over a link IF1 and is via an interconnection PI connected to a Message Handler Processor MHP associated with a memory M2 via a link IF2. MHP and SPP are both controlled by a controller CO via interface links CI1 and CI2 respectively.

All message related functions, e.g. message length validation, are handled by SPP, whilst all link related functions, e.g. address screening are handled by MHP.

The number of messages that can be handled by the connectionless server is related to the processing capacity of SPP and MHP.

The controller CO initializes and monitors MHP and SPP and their memories and handles erroneous situations.

The functions performed by MPSRI are similar to the generic interface functions handled by a link termination module TLK1/m and MPSRI is therefore not described in detail.

SPP is a pipelined processor which ensures fixed processing and delay times for each received packet, i.e. all actions to be performed by SPP are either performeds within a fixed processing time, or divided in subactions which can be performed within the latter time. SPP performs CRC handling and sequence number and length checks on packets. It comprises a protocol state machine PSM including a state table (both not shown). Its working will be explained later.

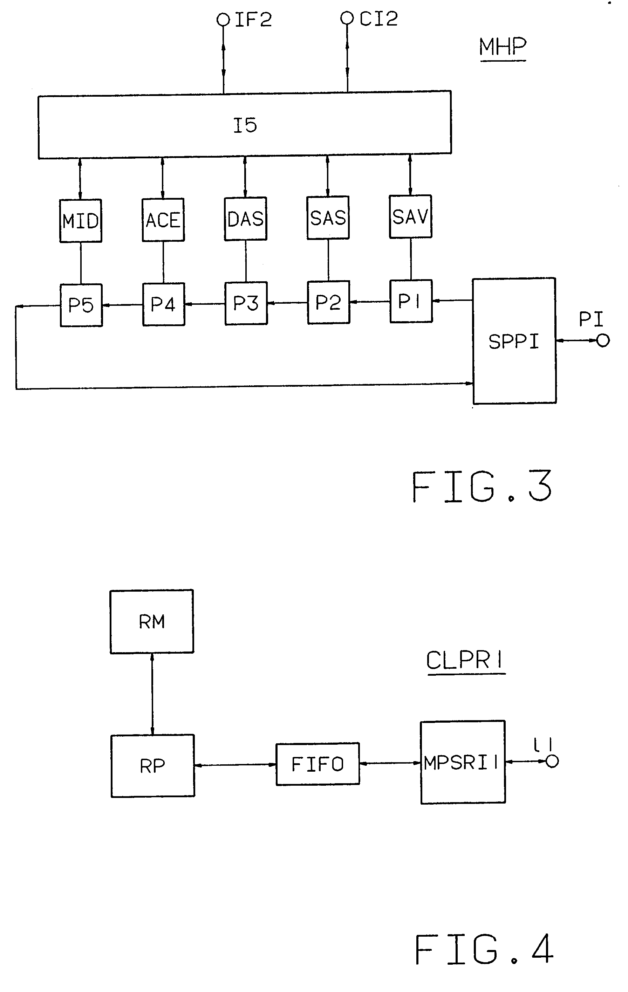

MHP, shown in Fig. 3, mainly performs address screening and validation, message identity allocation and access class enforcement. It is also a pipelined processor in which the processing time of each pipeline stage equals the inter arrival time of the packets in the server. It comprises as many registers as pipeline stages, i.e. 5 namely P1 to P5 to which the processing modules MID, ACE, DAS, SAS and SAV are associated respectively. MID performs message identity handling, ACE performs access class enforcement handling, and DAS, SAS and SAV realize destination address screening, source address screening and source address validation respectively. The latter processing modules have access to M2 over IF2 and to CO over CI2 of Fig. 2 via an interface module I5.

One of the Connectionless Packet Routers namely CLPR1, is represented in more detail in Fig. 4. It comprises an interface module MPSRI1 connected to the link l1 and having the same functionality as MPSRI of Fig. 2 MPSRI1 is connected via a first-in-first-out register FIFO to a routing processor RP executing routing algorithms. RP is connected to a memory module RM containing routing tables.

Modules such as RP are well known in the art and are for instance described in the article "Putting Routing Tables in Silicon" by Tong-Bi Pei and Charles Zukowskie for the IEEE Network magazine of January '92 pp. 42-50.

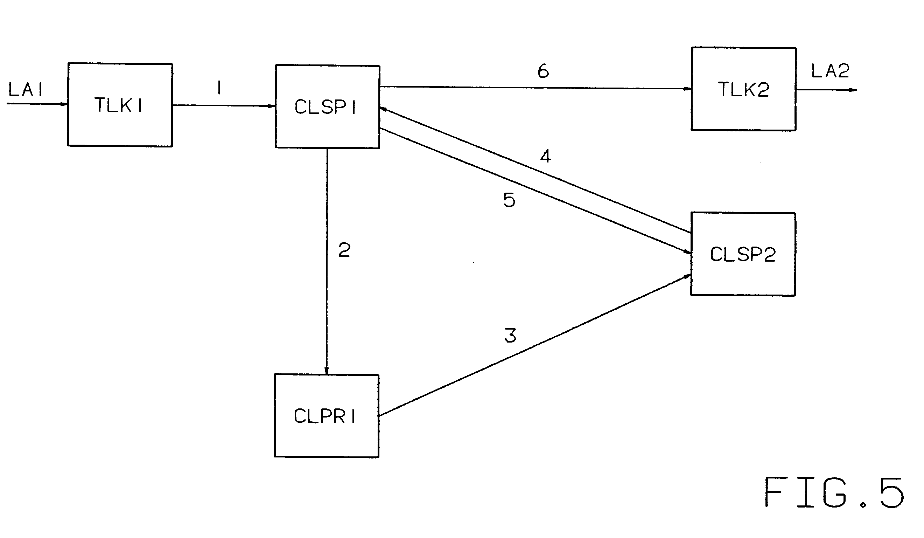

The operation of the above modules is explained hereafter by making reference to Figs. 1 to 4 and to Fig. 5 which represents a packet handling scenario for a packet received by the connectionless server CS from a terminal unit.

Supposing that this packet is received in CS by one of the link termination modules e.g. by TLK1 via LA1, it is routed by the latter module to a connectionless service processor, e.g. CLSP1, associated with LA1 and with the virtual connection indicated in the header of the received packet as explained earlier. This is symbolically indicated in Fig. 5 by line 1.

It is first supposed that the received packet is a BOM packet. In CLSP1 the latter packet is first processed by SPP which stores the packet in a (not shown) first-in-first-out register contained in M1 and which by means of the state table in PSM determines what actions have to be performed on the packet and executes these actions. Supposing these actions are successful, the state machine then enters another state, the value of which is stored in M1, and passes to MHP relevant information contained in the header of the packet, such as the BOM indication, an indication that CLSP1 has to act as input connectionless service processor and the source and destination address of the message found in the BOM packet. SAV, DAS and ACE then perform their corresponding actions mentioned earlier. Since CLSP1 has to act as input connectionless service processor SAS and MID perform no actions. The processing result of MHP is passed back to SPP which then enters a following state. It is supposed that all actions were successful.

Upon receipt of the packet, CLSP1 not only performs the above described actions, but at the same time it sends a first request to a connectionless packet router, e.g. CLPR1, which is selected at random by the switch MPSR. This is indicated in Fig. 5 by the line 2. The latter request contains the source and destination addresses of the message. Upon receipt of the request, CLPR1 executes its routing functions during the time the above actions are performed by CLSP1.

It has to be noted that while the above processing goes on in CLSP1 and CLPR1, other packets can be received by CLSP1. Since SPP and MHP are pipelined processors which are so dimensioned that an action of the pipeline does not require more time than the inter-arrival time of the received packets, the latter packets can be handled immediately upon receipt, i.e. on the fly. Moreover, the number of connectionless packet routers in the pool is chosen in such a way, that taking into account the time needed to perform their routing actions, there is always a packet router available when the above first request is sent.

Upon receipt of this request, MPSRI1 stores the received request in the FIFO whereafter RP executes its routing algorithms using the routing tables stored in RM.

CLPR1 uses the routing tables to determined the appropriate link leading to the destination specified in the earlier mentioned request and sends a second request for source address screening and MID allocation to a connectionless service processor, e.g. CLSP2, which is associated to the latter appropriate link. This is indicated in Fig. 5 by line 3.

CLSP2 receives in the second request an indication that it has to act as an output connectionless service processor and consequently only performs screening of the source address contained in the received message and allocates a free MID.

It has to be noted that since only one output processor is associated with a particular link, the MIDs for a particular link are always managed by one single output connectionless service processor.

After having performed its screening actions and having allocated an MID, CLSP2 sends a reply to CLSP1 via the switch MPSR as indicated by line 4 in Fig. 5. This reply contains the identification of the outgoing link and the allocated MID. In case of screening violation a negative reply is sent and CLSP1 then deletes all following packets related to the concerned message.

After receipt of a positive reply, CLSP1 stores the above link identity and MID in M1 and routes the corresponding packet, previously stored in the first-in-first-out register of M1 and retrieved therefrom by SPP, via L1 and over MPSR, to the outgoing link termination module, e.g. TLK2, corresponding with the identified outgoing link. This is indicated in Fig. 5 by line 6. From there the packet is sent via LA2 to the ATM network and to the requested destination.

When the received packet is a COM packet a similar scenario is followed except that no routing request is sent and no MID is allocated and that all information stored in M1 related to the used MID is now used to perform message related tests, such a message length checks. The previously stored link identity and MID is used to route the COM packet to the appropriate link termination module TLK2 as explained above.

When on the other hand the received packet is an EOM packet CLSP1 releases all message related data and sends a request to CLSP2 to release the MID as indicated in Fig. 5 by line 5.

It has to be noted that the received packets are shifted in the first-in-first-out register of M1 at a rate corresponding to the processing time of the elementary actions performed by SPP and to the processing time of the earlier mentioned pipeline stages of MHP, the packet being retrieved at the output of the register when CLSP1 and CLSP2 have performed their actions.

It has also to be noted that there is a possibility that the packet received by TLK2 cannot be sent over the ATM network due to lack of available bandwidth, in which case the packet has either to be queued or to be dropped. To avoid such a situation a congestion prevention module (not shown) consisting of a monitoring module and a measurement module is included in the connectionless server. The monitoring module is provided at the input of each input connectionless server processor. It monitors the receipt of packets, determines a mean data arrival rate thereof and deducts from the latter rate the required bandwidth for transmission of the packets over the ATM network. A measurement module provided at the link termination modules measures the bandwidth used on the corresponding outgoing link and transfers this information to the monitoring module, which checks whether the sum of the requested and used bandwidth does not exceed the bandwidth capacity of the latter link. If the capacity is exceeded, the packet is not processed and a message is sent to the originator of the packet indicating that it was not transferred due to overload.

Following is now a brief description of how the above described connectionless server can be extended to provide multicasting or point-to-multipoint communication.

A multicast information message is composed of multicast packets and contains in the header of its BOM packet a group address indicative of the destination addresses to which the latter packet has to be transmitted.

Link termination modules and input connectionless service processors do not differentiate between point-to-point packets and multicast packets. For this reason a multicast packet is initially handled as a point-to-point packet, i.e. the packet is routed from a receiving link termination module to an appropriate input connectionless service processor and from there a routing request is sent to a connectionless packet router module. There, based on the group address contained in the request, the packet is detected to be a multicast packet and the latter group address is translated into an external multicast tree code, i.e. a matrix of destination addresses to which the packet has to be sent. The connectionless packet routing module then sends a routing reply including the external multicase tree code and internal multicast routing information to the input connectionless service processor. The latter routing information, instead of being the address of a link termination module is the set of addresses of all output connectionless server processors, or a subset thereof and the input connectionless service processor sends copies of the packet to all output connectionless service processors indicated in the above set or subset. The latter processors each superpose a tree mark, indicative of the destinations they can reach, on the external multicase tree code to find out to which destinations they have to send copies of the packet and make these copies. After having adapted the external multicast tree code in each copy to remove those destinations to which the processors will send the copies, and after having allocated for each copy a MID, the latter processors transmit the copies to appropriate link termination modules for transmission to transfer connectionless servers and/or destination user terminals. When EOM packets are sent, the MID is released.

It has to be noted that part of the copying for multicasting is also done in the switch MPSR according to the internal routing information.

It has also to be noted that the mentioned translation additionnally provides a group address code which is, by a connectionless server having to send a packet to a terminal unit, translated back to the corresponding group address for inclusion in the packet thereby overwriting the external multicast tree code.

While the principles of the invention have been described above in connection with specific apparatus, it is to be clearly understood that this description is made only by way of example and not as a limitation on the scope of the invention.

## Claims

1. Connectionless server for a connection oriented switching network (ATM) to which are connected a plurality of terminals units (TU1/k) having access to said connectionless server said connectionless server being able to transfer messages constituted by information packets and received from said terminals units in a connectionless way over said connection oriented switching network, characterized in that said connectionless server includes a plurality of processing modules (TLK1/m; CLSP1/n; CLPR1/p) which perform respective predetermined control actions on said packets in a predetermined sequence and thereafter transfer said packets over said network and at least part of which communicate with each other over a switching means (MPSR).

2. Connectionless server according to claim 1, characterized in that said switching means (MPSR) is part of said switching network (ATM).

3. Connectionless server according to claim 1, characterized in that at least one of said processing modules is a routing module (CLPR1/p) which performs a routing operation consisting in determining the route to be followed by said information packets over said switching network (ATM).

4. Connectionless server according to claim 3, characterized in that said routing module (CLPR1/p), is substituted by a plurality of identical submodules each of which is able to perform said routing operation.

5. Connectionless server according to claim 1, characterized in that said connectionless server additionally includes a delay means (M1) in which each of said packets is delayed until all of said control actions are performed thereon.

6. Connectionless server according to claim 5, characterized in that said delay means is organized as a first-in-first-out shift register in which each of said information packets is shifted each time at least one of said control actions is performed on said packet, said packet being provided at an output of said shift register for transfer over said switching network (ATM), when all of said control actions on said packet have been performed.

7. Connectionless server according to claim 5, characterized in that the time interval needed to perform each of said control actions is at the most equal to the minimum inter arrival time of two successive information packets at said delay means.

8. Connectionless server according to claim 1, characterized in that said control actions include source address validation actions to validate a source address included in at least one of the packets of said message, destination address screening actions to evaluate a destination address inlcuded in at least one of the packets of said message, access class policing to limit the transmission rate of said packets to a maximum transmission rate, charging actions to enable charging on said transfer, routing actions to determine the route to be followed by said information packets over said switching network, source address screening actions to evaluate a source address included in at least one of the packets of said message and message identifier allocation actions to allocate to each of said packets and identifier which identifies the message to which said packet relates.

9. Connectionless server according to claim 4, characterized in that at least one of said submodules is able to convert a group address, contained in at least one multicast packet of a multicast message into a multicast address tree code and a group address code, at least one of said processing modules being able to interprete said multicast tree code, to make copies of said multicast information packet and to route said copies over said switching network according to said multicast tree code.

10. Connectionless server according to claim 9, characterized in that said submodule is able to make copies of said packet, to include said tree code and said group address code in said copies, and to transmit said copies to all of said processing modules able to interprete said tree code.

11. Connectionless server according to claim 10, characterized in that said processing modules which are able to interprete said tree code, convert said group address code into said group address and replace in at least one of said copies said tree code and said group address code by said group address when said copy has to be transmitted directly to one of said terminal units.

12. Connectionless server according to claim 1, characterized in that said connectionless server additionally includes a congestion prevention module comprising a measurement means to measure the bandwidth required to transfer said information packets over said connection oriented switching network, and a comparison means to compare said required bandwidth with the bandwidth available on said network for said transfer and to generate a control signal indicative of the result of said comparison.

13. Congestion prevention module located at an access of a switching network and which includes a mesurement means to measure the bandwidth required to transfer information packets over said switching network and a comparison means to compare said required bandwidth with the bandwidth available on said network for said transfer and to generate a control signal indicative of the result of said comparison.
